# EUROPÄISCHE PATENTSCHRIFT

(11) **EP 2 646 302 B1**
(45) Veröffentlichungstag und Bekanntmachung des Hinweises auf die Patenterteilung: **04.05.2016**
(21) Anmeldenummer: 11736104.8
(22) Anmeldetag: 27.07.2011
(51) Int. Cl.: B60T 17/02, F04B 45/04, F04B 43/02

(54) **MOTOR-PUMPENAGGREGAT**
MOTOR-PUMP ASSEMBLY
GROUPE MOTO-POMPE

(30) Priorität: 30.11.2010 DE 102010062160
(43) Veröffentlichungstag der Anmeldung: 09.10.2013
(73) Patentinhaber: Continental Teves AG & Co. oHG, 60488 Frankfurt (DE)
(72) Erfinder: KÖNIG, Harald, 61239 Ober-Mörlen (DE); RÜFFER, Manfred, 65843 Sulzbach (DE); NIEPENBERG, Marcel, 64521 Groß-Gerau (DE); GONZALEZ, Jose, 32549 Bad Oeynhausen (DE); STEINER, Stefan, 70178 Stuttgart (DE)
(86) Internationale Anmeldenummer: PCT/EP2011/062901
(87) Internationale Veröffentlichungsnummer: WO 2012/072282

(56) Entgegenhaltungen:
- EP-A1- 1 589 224
- WO-A1-2009/034044
- DE-A1- 4 241 825
- DE-A1- 4 241 826
- DE-A1-102007 005 223

## Beschreibung

Die Erfindung betrifft ein Motor-Pumpenaggregat, insbesondere zur Bereitstellung von Druck für eine Bremsbetätigungseinrichtung einer Kraftfahrzeugbremsanlage mit einem pneumatischen Bremskraftverstärker, insbesondere einem Vakuumbremskraftverstärker, umfassend eine Pumpe und einen die Pumpe antreibenden elektrischen Motor, wobei die Pumpe als Doppelmembranpumpe mit zwei gegenüberliegenden Arbeitsmembranen vorgesehen ist, welche jeweils zwischen einem Pumpengehäuse und einem Arbeitsraumdeckel eingespannt ist und dadurch einen Arbeitsraum begrenzt und welche mittels eines, Exzenter und Pleuelstangen aufweisenden Kurbelantriebs bewegbar sind, und wobei die Pleuelstangen jeweils einen Pleuelschaft und ein Pleuelauge aus Kunststoff aufweisen und mittels Wälzlagern auf den Exzentern beweglich gelagert sind.

Zur Bereitstellung von Vakuum für einen pneumatischen Bremskraftverstärker, dessen Innenraum in wenigstens eine Vakuumkammer und eine Arbeitskammer unterteilt ist, werden Vakuumpumpen eingesetzt, die aus der Vakuumkammer Restluft ansaugen und in die Atmosphäre ausstoßen. In der Automobilindustrie werden hierzu in der Regel Flügelzellenpumpen oder Schwenkflügelpumpen eingesetzt. Diese haben prinzipbedingt viel Reibung und müssen geschmiert werden, um eine akzeptable Lebensdauer zu erreichen. Vom Verbrennungsmotor des Kraftfahrzeuges angetriebene Vakuumpumpen mit Flügeln werden daher an den Ölkreislauf des Verbrennungsmotors angeschlossen. Dennoch muss ein nennenswerter Anteil der vom Verbrennungsmotor abgegebenen Leistung zum Antrieb einer solchen Pumpe aufgewendet werden. Und dies auch dann, wenn das Vakuum in der zu evakuierenden Kammer bereits voll ausgebildet ist. Daher ist es sinnvoll, die Vakuumpumpe mit elektrischer Energie zu betreiben und nur dann einzuschalten, wenn der absolute Druck in der Vakuumkammer über einen vorbestimmten Wert steigt.

Weiterhin kann in Fahrzeugen mit Elektro- bzw. Hybridantrieb die Vakuumpumpe nicht bzw. zeitweise nicht durch den Verbrennungsmotor angetrieben werden. Daher werden in diesen Fahrzeugen elektrisch angetriebene Vakuumpumpen eingesetzt.

Eine solche elektrisch angetriebene Pumpe mit einem Schmiermittelkreislauf auszustatten oder an einen solchen anzuschließen, würde einen unverhältnismäßig hohen Aufwand bedeuten. Somit kommen für den Einsatz in Kraftfahrzeugen mit Bremsanlagen mit elektrisch angetriebener Vakuumpumpe nur trocken laufende Vakuumpumpen in Frage. In Flügelzellenpumpen wird hierfür das selbstschmierende Material Graphit verwendet, aus dem mit hohem Aufwand die Flügel mit der erforderlichen Präzision hergestellt werden. Daher sind die Bemühungen dahingehend, zur elektrischen Bereitstellung von Bremsvakuum eine Membranpumpe zu verwenden.

Eine gattungsgemäßes Motor-Pumpenaggregat ist beispielsweise aus der DE 10 2007 005 223 A1 bekannt. Von der Automobilindustrie werden sehr hohe Anforderungen in Bezug auf den akustischen Komfort der Kraftfahrzeugkomponenten gestellt und von den Zulieferern robuste, langlebige Pumpen mit sehr geringen Geräuschemissionen gefordert. Um diese Forderungen zu erfüllen, sind bei dem bekannten Motor-Pumpenaggregat die Auslasskanäle in den Arbeitsraumdeckeln und im Pumpengehäuse derart angeordnet, dass aus den Arbeitsräumen verdrängte Luft in einen, den Kurbelantrieb umgebenden Innenraum des Pumpengehäuses geleitet wird. Weiter ist eine Luftauslasseinheit vorgesehen, welche ein geräuscharmes Ausblasen der Luft aus dem Innenraum durch Umlenken der Luft ermöglicht. Der Innenraum, auch Kurbelraum genannt, dient so als Schalldämpfungsraum, da die ausgeblasene Luft nicht direkt in die Atmosphäre geleitet wird. Durch das Umlenken der Luft in der Luftauslasseinheit kann das Geräuschniveau zusätzlich wesentlich gesenkt werden, so dass Ausblasgeräusche nahezu vermieden werden.

Durch den vermehrten Einsatz von Fahrzeugen mit Elektroantrieb steigen die Akustikanforderungen weiter an, welche an das Motor-Pumpenaggregat gestellt werden.

EP 1 589 224 A1 ist ein Verdichter-Doppelkolben mit einem in einer Aussparung des Doppelkolbens drehbar angeordneten Pleuel bekannt, bei der zwischen dem Lager und dem Pleuel eine Schwingungsdämpfungseinrichtung mit einer elastischen schwingungsdämpfenden Schicht eingesetzt ist. Eine derartige Konstruktion ist jedoch für einen gattungsgemäßen Doppelmembranpumpe mit axial versetzten Pleueln zu aufwändig und in Bezug auf die benötigten Bauraum und Bautoleranzen verbesserungswürdig.

Daher ist es Aufgabe der vorliegenden Erfindung, ein Motor-Pumpenaggregat bereitzustellen, welches den steigenden Anforderungen in Bezug auf den akustischen Komfort Rechnung trägt und gleichzeitig kompakt und kostengünstig aufgebaut werden kann.

Die Aufgabe wird erfindungsgemäß durch ein Motor-Pumpenaggregat mit der Merkmalskombination nach dem Anspruch 1 gelöst, Unteransprüche geben weitere vorteilhafte Ausführungsformen und Weiterbildungen an.

Der Sitz des Wälzlagers im Pleuelauge kann auf diese Weise ohne weitere Bauteile realisiert werden. Ferner kann hierdurch ein geringes Lagerspiel im Wälzlager vorgesehen werden.

Indem die Elastomerschicht durch Umspritzen des in das Pleuelauge eingelegten Wälzlagers hergestellt ist, wird die Elastomerschicht gleichzeitig mit dem Kunststoff des Pleuelauges verbunden. Das Wälzlager kann so in einfacher Weise in das Pleuelauge integriert werden.

Eine alternative Ausführungsform der Erfindung sieht vor, dass zur Aufnahme des Wälzlagers ein Pleuelring vorgesehen ist, welcher elastisch in das Pleuelauge eingebettet vorgesehen ist. Damit übernimmt der Pleuelring, welcher vorzugsweise aus Metall vorgesehen ist, den Pressverband zum Wälzlager und die Befestigung des Lagers kann wie bisher durch Einpressen in die Pleuelstange erfolgen. Somit kann dieser Herstellungsschritt auch ohne Modifikation in vorhandene Montagelinien übernommen werden.

In einfacher Weise ist der Pleuelring durch Umspritzen mit der Elastomerschicht befestigt vorgesehen.
Gemäß einer vorteilhaften Ausführungsform der Erfindung kann zwischen dem Pleuelring und dem Pleuelauge eine Verriegelung vorgesehen sein, wodurch die Befestigung des Lagers sichergestellt werden kann.
Eine einfache Verriegelung wird gemäß einer vorteilhaften Ausführungsform erreicht, wenn zwischen dem Pleuelring und dem Pleuelauge eine mechanische Verriegelung vorgesehen ist. Diese ist vorzugsweise als Bajonettverriegelung vorgesehen.
Eine weitere vorteilhafte Ausführungsform der Erfindung sieht vor, dass zwischen dem Pleuelring und dem Pleuelauge eine elastische Verriegelung vorgesehen ist.
Die elastische Verriegelung ist vorzugsweise durch Hinterschnitte im Pleuelring ausgebildet, in welche die Elastomerschicht zur Verriegelung hineinfließen kann.
Eine weitere Verbesserung der Verriegelung kann gemäß einer bevorzugten Ausführungsform dadurch erzielt werden, dass auf einer Innenseite des Pleuelauges Vorsprünge vorgesehen sind, welche zur Verriegelung von der Elastomerschicht umgeben sind. Weitere Merkmale, Vorteile und Anwendungsmöglichkeiten der Erfindung gehen aus der nachfolgenden Beschreibung von Ausführungsbeispielen sowie anhand der Zeichnung hervor.

Es zeigt:
- Figur 1: ein bekanntes Motor-Pumpenaggregat im Längsschnitt;
- Figur 2: eine Arbeitsmembran mit befestigter Pleuelstange eines ersten erfindungsgemäßen Ausführungsbeispiels eines Motor-Pumpenaggregates in räumlicher Darstellung;
- Figur 3: ein Schnitt durch das Pleuelauge der Pleuelstange gemäß Fig. 2;
- Figur 4: eine Arbeitsmembran mit befestigter Pleuelstange eines zweiten erfindungsgemäßen Ausführungsbeispiels eines Motor-Pumpenaggregates in räumlicher Darstellung;
- Figur 5: ein Schnitt durch das Pleuelauge der Pleuelstange gemäß Fig. 4;
- Figur 6: ein Schnitt durch ein Pleuelauge einer Pleuelstange eines dritten erfindungsgemäßen Ausführungsbeispiels eines Motor-Pumpenaggregates und
- Figur 7: ein Schnitt durch ein Pleuelauge einer Pleuelstange eines vierten erfindungsgemäßen Ausführungsbeispiels eines Motor-Pumpenaggregates.

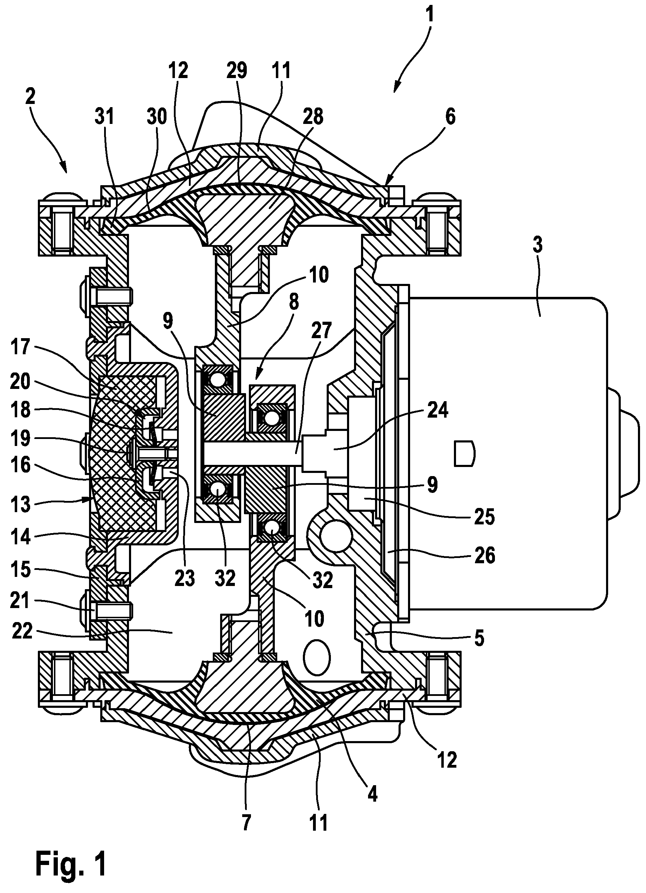

Fig. 1 zeigt ein bekanntes Motor-Pumpenaggregat 1 im Längsschnitt, welches eine Pumpe 2 mit einem Pumpengehäuse 5 und einen die Pumpe 2 antreibenden elektrischen Motor 3 umfasst, wobei der Motor 3 beispielsweise als Gleichstrommotor ausgebildet sein kann.

Die Pumpe 2 ist als Doppelmembranpumpe mit zwei gegenüberliegenden Arbeitsmembranen 4 vorgesehen, welche jeweils zwischen dem Pumpengehäuse 5 und einem Arbeitsraumdeckel 6 eingespannt ist und dadurch einen Arbeitsraum 7 begrenzt. Die Arbeitsmembrane 4 sind mittels eines Kurbelantriebs 8 gegensinnig bewegbar, welcher je Arbeitsmembran 4 einen Exzenter 9 und eine Pleuelstange 10 umfasst. Der Arbeitsraumdeckel 6 weist einen Oberdeckel 11 sowie einen Unterdeckel 12 auf, die luftdicht miteinander verschweißt, vernietet bzw. verschraubt sind.

In den Arbeitsraumdeckeln 6 sind nicht gezeigte Einlass- und Auslassventile vorgesehen. Vom dem Auslassventil wird die ausgestoßene Luft über einen Auslasskanal im Arbeitsraumdeckel 6 zu einem Auslasskanal im Pumpengehäuse 5 geleitet, die luftdicht mittels eines Dichtelements verbunden sind. Die beiden Auslasskanäle im Pumpengehäuse 5 münden in einen Innenraum 22 des Pumpengehäuses 5, dem so genannten Kurbelraum, welcher den Kurbelantrieb 8 umgibt. Eine in oder an dem Pumpengehäuse 5 vorgesehene Luftauslasseinheit 13 ermöglicht ein geräuscharmes Ausblasen der Luft aus dem Innenraum 22, so dass der Innenraum 22, welcher auch Kurbelraum genannt wird, als Schalldämpfungsraum dient. Die Luftauslasseinheit 13 umfasst ein Rückschlagventil 20 umfassend einen ein- oder mehrteiligen Ventilkörper 18, das ein Zurückströmen von bereits ausgestoßener Luft sowie das Eindringen flüssiger oder gasförmiger Substanzen in den Kurbelraum 22 verhindert.

Zusätzlich wird der Luftschall beim Austreten der Luft aus dem Innenraum 22 dadurch vermindert, dass die Luftauslasseinheit 13 ein, in einem Filtergehäuse 14 angeordnetes Filterelement 17 aufweist, durch welchen die Luft in die Atmosphäre austritt. Weiter umfasst die Luftauslasseinheit 13 einen Luftauslassdeckel 15, eine Luftauslassverschlusskappe 16 sowie einen Ventilkörper 18 und ist als vormontierbare Baugruppe vorgesehen. Der Luftauslassdeckel 15, die Luftauslassverschlusskappe 16 und das Filtergehäuse 14 sind jeweils mit Schraubelementen 19,21 befestigt. Wie ersichtlich ist, ist das Filtergehäuse 14 mit dem Luftauslassdeckel 15 vernietet. Zur Schalldämpfung können weitere Mittel vorgesehen sein, welche vorteilhafterweise in die Baugruppe Luftauslasseinheit 13 integriert sind. Hierzu kann die Luftauslasseinheit 13 einen Zwischenboden aufweisen, durch welche die Luft beim Durchströmen der Luftauslasseinheit 13 mehrmals umgelenkt wird. Ferner können auch mehrere Filterelemente in der Luftauslasseinheit 13 vorgesehen sein.

Wenn der Luftdruck im Innenraum 22 der Pumpe 2 größer wird, als der die Pumpe 2 umgebende Atmosphärendruck, öffnet sich das Rückschlagventil 20, indem sich der Ventilkörper 18 von Durchgangsbohrungen 23 im Filtergehäuse 14 zumindest teilweise abhebt, und die Luft durch nicht dargestellte Öffnungen in der Luftauslassverschlusskappe 16 und durch das Filterelement 17 aus dem Pumpengehäuse 5 in die Atmosphäre entweichen kann.

Weiter ist am Pumpegehäuse 5 ein nicht dargestellter Anschluss vorgesehen, über den beispielsweise ein angeschlossener Bremskraftverstärker evakuiert wird.

Aus Fig. 1 ist weiter zu entnehmen, dass eine Motorwelle 24 des elektrischen Motors 3 in einem ersten, nicht dargestellten, im Motor 3 angeordneten Lager und in einem zweiten Lager 25 gelagert ist, wobei das zweite Lager 25 zum Teil von einem Motorgehäuse 26 und zum Teil von dem Pumpengehäuse 5 aufgenommen wird. Dadurch wird eine vorteilhafte Zentrierung von Motor 3 und Pumpe 2 erreicht. Die Motorwelle 24 dient bei diesem Ausführungsbeispiel gleichzeitig als Exzenterwelle 27, welche den Kurbelantrieb 8 mit den Exzentern 9 und den Pleuelstangen 10 trägt. Es ist jedoch auch eine separate Ausführung von Motorwelle 24 und Exzenterwelle 27 bekannt.

Die Arbeitsmembran 4 trennt den Arbeitsraum 7 vom Kurbelraum 22 und ist fest mit einem Stößel 28 verbunden ist, wobei der vorzugsweise nicht deformierbare Stößel 28 von dem elastisch deformierbaren Werkstoff der Membran 4 umspritzt ist. Dadurch entsteht in der Umgebung des Stößels 28 ein schwer deformierbarer Abschnitt 29 im Zentrum der Arbeitsmembran 4, der nach außen in einen leicht deformierbaren Abschnitt 30 übergeht, wobei dieser wiederum nach außen in einen Membranwulst 31 übergeht, der mit dem Pumpengehäuse 5 fest und luftdicht verbunden ist. Der Stößel 28 kann entweder von dem Werkstoff der Pleuelstange 10 umspritzt sein, mittels einer Schweiß- oder einer Gewindeverbindung fest mit der Pleuelstange 10 verbunden oder mit der Pleuelstange 10 einteilig vorgesehen sein. Die Pleuelstangen 10 sind mittels Wälzlagern 32 in Form von Kugellagern auf den Exzentern 9 beweglich gelagert.

Die nachfolgend beschriebenen Ausführungsbeispiele eines erfindungsgemäßen Motor-Pumpenaggregates unterscheiden sich zu dem bekannten, gemäß Fig. 1 beschriebenen Motor-Pumpenaggregat 1 im Wesentlichen nur im Aufbau der Pleuelstangen, so dass auf die Beschreibung des restlichen Aufbaus des Motor-Pumpenaggregates verzichtet werden kann. Mit anderen Worten können die erfindungsgemäßen Pleuelstangen in dem bekannten Motor-Pumpenaggregat 1 Anwendung finden. Allerdings ist deren Einsatz nicht auf das gemäß Fig. 1 beschriebene Motor-Pumpenaggregat 1 beschränkt, sondern kann grundsätzlich auch in anderen Aggregaten vorgesehen werden.
Gleiche Bauteile sind mit gleichen Bezugszeichen versehen.

Durch den vermehrten Einsatz von Fahrzeugen mit Elektroantrieb steigen die Akustikanforderungen, welche an das Motor-Pumpenaggregat 1 gestellt werden, so dass die Aufgabe zu lösen ist, den wachsenden Anforderungen in Bezug auf den akustischen Komfort Rechnung zu tragen.

Bei jeder Umdrehung des Kurbelantriebs 8 erfolgt zweimal ein Kraftrichtungswechsel in einem Pleuelschaft 37 der Pleuelstange 10. Bedingt durch das Lagerspiel im Wälzlager 32 in Form eines Kugellagers trifft dabei ein Außenring 35 des Wälzlagers 32, welcher bei bekannten Aggregaten mit einem Pleuelauge 33 der Pleuelstange 10 verpresst ist, mit hoher Dynamik auf Wälzkörper 36 und einen rotierenden Innenring 34, wobei die entstehenden Anregungen auf den Exzenter 9 übertragen werden.

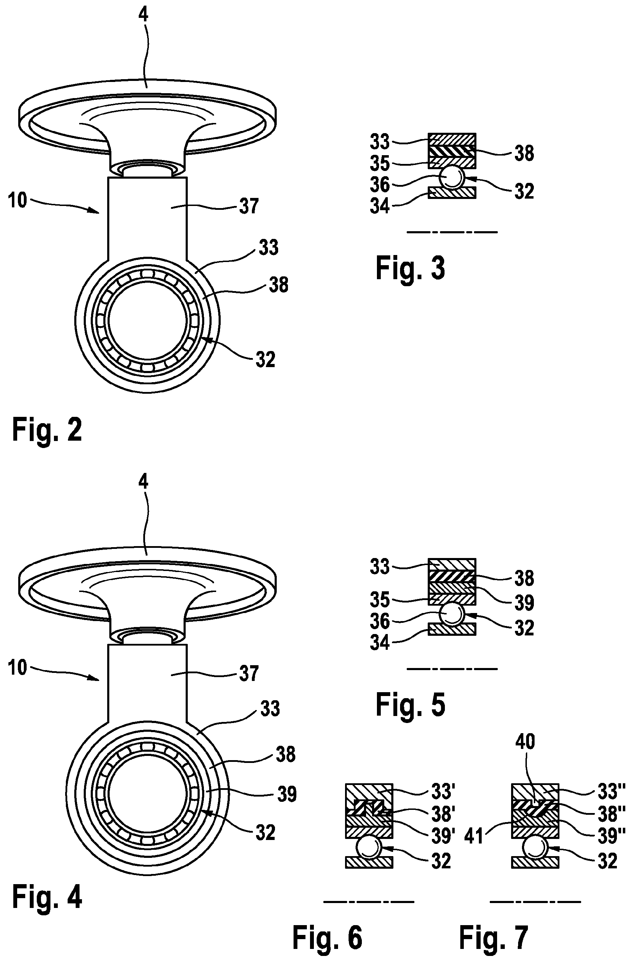

Daher ist bei allen vier beschriebenen Ausführungsbeispielen gemäß den Fig. 2 bis 7 zwischen dem Pleuelauge 33,33',33" und dem Wälzlager 32 eine elastische Entkopplung vorgesehen, welche eine Übertragung von Schwingungen im Pleuelschaft 37, die bei einem Kraftrichtungswechsel der Umdrehung des Kurbelantriebs 8 entstehen, auf das Wälzlager 32 dämpft bzw. eliminiert.

Hierfür sehen die Ausführungsformen vor, das Wälzlager 32 zur elastischen Entkopplung elastisch in das Pleuelauge 33,33',33" einzubetten, so dass die bei der Umdrehung des Kurbelantriebs 8 entstehenden Schwingungen nur gedämpft bzw. gar nicht auf das Wälzlager 32 übertragen werden können.

Fig. 2 zeigt eine Arbeitsmembran 4 mit befestigter Pleuelstange 10 eines ersten erfindungsgemäßen Ausführungsbeispiels eines Motor-Pumpenaggregates 1 in räumlicher Darstellung, wobei in Fig. 3 ein Schnitt durch das Pleuelauge 33 der Pleuelstange 10 dargestellt ist. Insbesondere aus Fig. 3 wird ersichtlich, dass die elastische Entkopplung als eine Elastomerschicht 38 zwischen dem Pleuelauge 33 und dem Außenring 35 des Wälzlagers 32 vorgesehen ist. Hierdurch wird der Sitz des Wälzlagers 32 im Pleuelauge 33 ohne weitere Bauteile realisiert und es kann ein geringes Lagerspiel im Wälzlager 32 vorgesehen werden.

Die Befestigung des Wälzlagers 32 im Pleuelauge 33 erfolgt in einfacher Weise durch Umspritzen des in das Pleuelauge 33 eingelegten Wälzlagers 32 mit der Elastomerschicht 38.

Den Fig. 4 und 5 ist ein zweites, alternatives Ausführungsbeispiel zu entnehmen, wobei Fig. 4 die Arbeitsmembran 4 mit befestigter Pleuelstange 10 in räumlicher Darstellung und Fig. 5 einen Schnitt durch das Pleuelauge 33 der Pleuelstange 10 gemäß Fig. 4 zeigen.

Diese alternative Ausführungsform sieht im Gegensatz zum ersten Ausführungsbeispiel vor, dass zur Aufnahme des Wälzlagers 32 ein Pleuelring 39 vorgesehen ist, welcher elastisch in das Pleuelauge 33 eingebettet vorgesehen ist. Die Einbettung erfolgt in einfacher Weise durch Umspritzen des Pleuelringes 39 mit der Elastomerschicht 38.
Damit übernimmt der Pleuelring 39, welcher vorzugsweise aus Metall vorgesehen ist, den Pressverband zum Außenring 35 des Wälzlagers 32 und die Befestigung des Lagers kann wie bisher durch Einpressen in die Pleuelstange 10 erfolgen, ohne dass eine Modifikation von vorhandenen Montagelinien notwendig ist. Durch diese Ausgestaltung der Lagerbefestigung ist es nicht notwendig, den Außenring 35 vor der Montage bzw. vor dem Umspritzen zu entfetten.
Zudem wird durch die nachträgliche Verpressung verhindert, dass im Wälzlager 32 befindliches Schmiermittel bei der Einbettung des Pleuelringes 39 ausläuft.

Den Fig. 6 und 7 sind zwei weitere Ausführungsbeispiele zu entnehmen. Diese unterscheiden sich zum zweiten Ausführungsbeispiel gemäß den Fig. 4 und 5 darin, dass zwischen einem Pleuelring 39', 39" und dem Pleuelauge 33',33" eine Verriegelung vorgesehen ist, wodurch die Befestigung des Wälzlagers 32 sichergestellt werden kann.

Wie dem Schnitt gemäß Fig. 6 durch das Pleuelauge 33' zu entnehmen ist, ist zwischen dem Pleuelring 39' und dem Pleuelauge 33' eine mechanische Verriegelung vorgesehen, welche beispielsweise als Bajonettverriegelung vorgesehen und die mittels der Elastomerschicht 38' elastomer eingebunden ist.

Dagegen zeigt Fig. 7 im Schnitt durch das Pleuelauge 33' des vierten Ausführungsbeispiels eine elastische Verriegelung zwischen dem Pleuelring 39" und dem Pleuelauge 33". Die elastische Verriegelung ist durch Hinterschnitte 41 im Pleuelring 39" ausgebildet, in welche die Elastomerschicht 38" zur Verriegelung hineinfließen kann, wobei eine weitere Verbesserung der Verriegelung dadurch erzielt werden kann, dass auf einer Innenseite des Pleuelauges 33" Vorsprünge 40 vorgesehen sind, welche zusätzlich zur Verriegelung von der Elastomerschicht 38" umgeben sind. Möglich ist hierbei auch, dass der Pleuelring 39" ein Wälzlagerinnenring ist.

### Bezugszeichenliste

- 1: Motor-Pumpenaggregat
- 2: Pumpe
- 3: Motor
- 4: Arbeitsmembran
- 5: Pumpengehäuse
- 6: Arbeitsraumdeckel
- 7: Arbeitsraum
- 8: Kurbelantrieb
- 9: Exzenter
- 10: Pleuelstange
- 11: Oberdeckel
- 12: Unterdeckel
- 13: Luftauslasseinheit
- 14: Filtergehäuse
- 15: Luftauslassdeckel
- 16: Luftauslassverschlusskappe
- 17: Filterelement
- 18: Ventilkörper
- 19: Schraubelement
- 20: Rückschlagventil
- 21: Schraubelement
- 22: Innenraum
- 23: Durchgangsbohrung
- 24: Motorwelle
- 25: Lager
- 26: Motorgehäuse
- 27: Exzenterwelle
- 28: Stößel
- 29: Abschnitt
- 30: Abschnitt
- 31: Dichtwulst
- 32: Wälzlager
- 33: Pleuelauge
- 34: Innenring
- 35: Außenring
- 36: Wälzkörper
- 37: Pleuelschaft
- 38: Elastomerschicht
- 39: Pleuelring
- 40: Vorsprung
- 41: Hinterschnitt

## Patentansprüche

1. Motor-Pumpenaggregat (1), insbesondere zur Bereitstellung von Druck für eine Bremsbetätigungseinrichtung einer Kraftfahrzeugbremsanlage mit einem pneumatischen Bremskraftverstärker, insbesondere einem Vakuumbremskraftverstärker, umfassend eine Pumpe (2) und einen die Pumpe (2) antreibenden elektrischen Motor (3), wobei die Pumpe (2) als Doppelmembranpumpe mit zwei gegenüberliegenden Arbeitsmembranen (4) vorgesehen ist, welche jeweils zwischen einem Pumpengehäuse (5) und einem Arbeitsraumdeckel (6) eingespannt ist und dadurch einen Arbeitsraum (7) begrenzt und welche mittels eines, Exzenter (9) und Pleuelstangen (10) aufweisenden Kurbelantriebs (8) bewegbar sind, und wobei die Pleuelstangen (10) jeweils einen Pleuelschaft (37) und ein Pleuelauge (33;33';33") aus Kunststoff aufweisen und mittels Wälzlagern (32) auf den Exzentern (9) beweglich gelagert sind, wobei zur elastischen Entkopplung eine Elastomerschicht (38;38';38'') jeweils zwischen dem Pleuelauge (33;33';33'') und einem Außenring (35) des Wälzlagers (32) oder zwischen dem Pleuelauge (33) und einem zur Aufnahme des Wälzlagers (32) vorgesehenen Pleuelring (39;39';39") angeordnet ist, welche eine Übertragung von Schwingungen im Pleuelschaft (37), die bei einem Kraftrichtungswechsel der Umdrehung des Kurbelantriebs (8) entstehen, auf das Wälzlager (32) dämpft, **dadurch gekennzeichnet, dass** die Elastomerschicht (38;38';38") mit ihrer radialen Außenfläche unmittelbar mit dem Kunststoff des Pleuelauges (33;33';33") verbunden und durch Umspritzen des in das Pleuelauge (33) eingelegten Wälzlagers (32) oder des Pleuelrings (39;39';39") hergestellt ist, wodurch das Wälzlager (32) oder der Pleuelring (39;39';39") am Pleuelauges (33;33';33") befestigt ist.

2. Motor-Pumpenaggregat (1) nach Anspruch 1, **dadurch gekennzeichnet, dass** zwischen dem Pleuelring (39';39") und dem Pleuelauge (33';33") eine Verriegelung vorgesehen ist.

3. Motor-Pumpenaggregat (1) nach Anspruch 2, **dadurch gekennzeichnet, dass** zwischen dem Pleuelring (39') und dem Pleuelauge (33') eine mechanische Verriegelung vorgesehen ist.

4. Motor-Pumpenaggregat (1) nach Anspruch 3, **dadurch gekennzeichnet, dass** die mechanische Verriegelung als Bajonettverriegelung vorgesehen ist.

5. Motor-Pumpenaggregat (1) nach Anspruch 2, **dadurch gekennzeichnet, dass** zwischen dem Pleuelring (39") und dem Pleuelauge (33") eine elastische Verriegelung vorgesehen ist.

6. Motor-Pumpenaggregat (1) nach Anspruch 5, **dadurch gekennzeichnet, dass** die elastische Verriegelung durch Hinterschnitte (41) im Pleuelring (39") ausgebildet ist, in welche die Elastomerschicht (38") zur Verriegelung hineinfließen kann.

7. Motor-Pumpenaggregat (1) nach Anspruch 5, **dadurch gekennzeichnet, dass** auf einer Innenseite des Pleuelauges (33'') Vorsprünge (40) vorgesehen sind, welche zur Verriegelung von der Elastomerschicht (38'') umgeben sind.

## Claims

1. Motor-pump assembly (1) in particular for providing pressure for a brake actuation device of a motor vehicle brake system with a pneumatic brake booster, in particular a vacuum brake booster, comprising a pump (2) and an electric motor (3) driving the pump (2), wherein the pump (2) is provided as a double diaphragm pump with two opposing working diaphragms (4) which are each clamped between a pump housing (5) and a working chamber cover (6) and thus delimit a working chamber (7) and which are movable by means of a crank drive (8) having an eccentric (9) and connecting rods (10), and wherein the connecting rods (10) each have a connecting rod shank (37) and a connecting rod eye (33; 33'; 33") of plastic and are mounted movably on the eccentrics (9) by means of roller bearings (32), wherein, for resilient decoupling, an elastomer layer (38; 38'; 38") is arranged between each connecting rod eye (33; 33'; 33") and an outer ring (35) of the roller bearing (32) or between the connecting rod eye (33) and a connecting rod ring (39; 39'; 39") provided for receiving the roller bearing (32), which elastomer layer damps a transmission to the roller bearing (32) of vibrations in the connecting rod shank (37) which occur on a force direction change on the rotation of the crank drive (8),
**characterized in that** the elastomer layer (38; 38'; 38") is connected by way of its radial outer face directly to the plastic of the connecting rod eye (33; 33'; 33") and is produced by way of injection-moulded encapsulation of the roller bearing (32) which is inserted into the connecting rod eye (33) or of the connecting rod ring (39; 39'; 39"), as a result of which the roller bearing (32) or the connecting rod ring (39; 39'; 39") is fastened to the connecting rod eye (33; 33'; 33").

2. Motor-pump assembly (1) according to Claim 1,
**characterized in that** a lock is provided between the connecting rod ring (39'; 39") and the connecting rod eye (33'; 33").

3. Motor-pump assembly (1) according to Claim 2,
**characterized in that** a mechanical lock is provided between the connecting rod ring (39') and the connecting rod eye (33').

4. Motor-pump assembly (1) according to Claim 3,
**characterized in that** the mechanical lock is provided as a bayonet lock.

5. Motor-pump assembly (1) according to Claim 2,
**characterized in that** a resilient lock is provided between the connecting rod ring (39") and the connecting rod eye (33").

6. Motor-pump assembly (1) according to Claim 5,
**characterized in that** the resilient lock is formed by undercuts (41) in the connecting rod ring (39") into which the elastomer layer (38") can flow for locking.

7. Motor-pump assembly (1) according to Claim 5,
**characterized in that** on an inside of the connecting rod eye (33"), protrusions (40) are provided which are surrounded by the elastomer layer (38") for locking.

## Revendications

1. Groupe moto-pompe (1), en particulier pour fournir de la pression pour un dispositif de commande de frein d'une installation de frein de véhicule automobile, avec un servofrein pneumatique, en particulier un servofrein à vide, comprenant une pompe (2) et un moteur électrique (3) entraînant la pompe (2), la pompe (2) étant prévue sous forme de pompe à double membrane avec deux membranes de travail (4) opposées, qui sont à chaque fois serrées entre un boîtier de pompe (5) et un couvercle d'espace de travail (6) et délimitent ainsi un espace de travail (7) et qui peuvent être déplacées au moyen d'un entraînement à manivelle (8) présentant des excentriques (9) et des bielles (10), et les bielles (10) présentant à chaque fois une tige de bielle (37) et un oeil de bielle (33 ; 33' ; 33") en plastique et étant supportées de manière déplaçable au moyen de paliers à roulement (32) sur les excentriques (9), une couche en élastomère (38 ; 38' ; 38") étant disposée à chaque fois, pour le désaccouplement élastique, entre l'oeil de bielle (33 ; 33' ; 33") et une bague extérieure (35) du palier à roulement (32) ou entre l'oeil de bielle (33) et une bague de bielle (39 ; 39' ; 39") prévue pour recevoir le palier à roulement (32), laquelle couche en élastomère amortit un transfert au palier à roulement (32) d'oscillations dans la tige de bielle (37) qui se produisent lors d'un changement de direction de force de la rotation de l'entraînement à manivelle (8), **caractérisé en ce que** la couche en élastomère (38 ; 38' ; 38'') est connectée directement au plastique de l'oeil de bielle (33 ; 33' ; 33") par sa surface extérieure radiale et est fabriquée par surmoulage du palier à roulement (32) introduit dans l'oeil de bielle (33) ou de la bague de bielle (39 ; 39' ; 39"), de sorte que le palier à roulement (32) ou la bague de bielle (39 ; 39' ; 39'') soit fixé(e) sur l'oeil de bielle (33 ; 33' ; 33'').

2. Groupe moto-pompe (1) selon la revendication 1,
**caractérisé en ce qu'**entre la bague de bielle (39' ; 39") et l'oeil de bielle (33' ; 33") est prévu un verrouillage.

3. Groupe moto-pompe (1) selon la revendication 2,
**caractérisé en ce qu'**entre la bague de bielle (39') et l'oeil de bielle (33') est prévu un verrouillage mécanique.

4. Groupe moto-pompe (1) selon la revendication 3,
**caractérisé en ce que** le verrouillage mécanique est prévu sous la forme d'un verrouillage à baïonnette.

5. Groupe moto-pompe (1) selon la revendication 2,
**caractérisé en ce qu'**entre la bague de bielle (39") et l'oeil de bielle (33") est prévu un verrouillage élastique.

6. Groupe moto-pompe (1) selon la revendication 5,
**caractérisé en ce que** le verrouillage élastique est réalisé par des contre-dépouilles (41) dans la bague de bielle (39"), dans lesquelles la couche en élastomère (38") peut couler en vue du verrouillage.

7. Groupe moto-pompe (1) selon la revendication 5,
**caractérisé en ce que** des saillies (40) sont prévues du côté intérieur de l'oeil de bielle (33"), lesquelles sont entourées par la couche en élastomère (38") en vue du verrouillage.
